# FASCICULE DE BREVET EUROPEEN

(11) **EP 3 741 965 B1**
(45) Date de publication et mention de la délivrance du brevet: **16.10.2024**
(21) Numéro de dépôt: 20175251.6
(22) Date de dépôt: 18.05.2020
(51) Int. Cl.: F01D 25/24, F02C 7/20, F02K 9/60, F02K 9/46

(54) **TURBOMACHINE COMPRENANT UNE BRIDE ANNULAIRE DE FIXATION**
TURBOMASCHINE, DIE EINEN RINGFÖRMIGEN BEFESTIGUNGSFLANSCH UMFASST
TURBINE ENGINE COMPRISING AN ANNULAR ATTACHMENT FLANGE

(30) Priorité: 20.05.2019 FR 1905256
(43) Date de publication de la demande: 25.11.2020
(73) Titulaire: ArianeGroup SAS, 78130 Les Mureaux (FR)
(72) Inventeur: LOISEAU, Cyril, 27207 VERNON CEDEX (FR); BOUFFLERT, Sébastien, 27207 VERNON CEDEX (FR); LEMAIRE, Thibaut, 27207 VERNON CEDEX (FR); BRIAL, Alexandre, 27207 VERNON CEDEX (FR)
(74) Mandataire: Cabinet Beau de Loménie

(56) Documents cités:
- US-A- 3 173 250
- US-A- 4 126 405
- US-A1- 2012 077 607

## Description

### Domaine technique

Le présent exposé concerne une turbomachine comprenant une bride annulaire de fixation.

### Technique antérieure

On connait des turbomachines comprenant une turbopompe. La turbopompe est composée d'une pompe généralement froide et d'une turbine, généralement activée par des gaz chauds. L'intégration de l'ensemble de la turbomachine nécessite de maîtriser le passage des efforts entre la pompe et la turbine tout en maîtrisant les changements de dimension dus à la différence de températures entre la pompe et la turbine.

Pour les turbomachines dites « low power », c'est-à-dire dans lesquelles les niveaux de pression sont généralement inférieurs à 100 bars et les gradients thermiques inférieurs à 450 K entre la pompe et la turbine, le carter de la turbine est relié au reste de la turbomachine, en général au moyeu central de la turbomachine, par une bride annulaire de fixation positionnée sous le tore d'admission de la turbine.

Cependant, pour les turbomachines dites « high power », c'est-à-dire dans lesquelles les niveaux de pression sont généralement supérieurs à 100 bars et les gradients thermiques supérieurs à 450 K entre la pompe et la turbine, la différence de température entre la pompe et la turbine créent des contraintes mécaniques relativement importantes lorsque la turbine, et en particulier le tore d'admission de la turbine, est reliée au moyeu central de la turbomachine par une bride annulaire de fixation positionnée sous le tore d'admission de la turbine.

Aussi, afin de limiter les gradients thermiques dans la bride annulaire, la turbine, en particulier le carter de turbine, est reliée au reste de la turbomachine par une bride annulaire de fixation disposée au-dessus du tore d'admission de la turbine et dont une extrémité est reliée à la turbine et une extrémité est reliée à un carter extérieur de la pompe de la turbomachine. Du côté turbine, la bride annulaire de fixation est reliée à deux autres brides et forme une bride triple ce qui rend la conception et le montage de la turbomachine, en particulier de la turbine, plus complexe que dans le cas d'une turbomachine dite « low power ».

En outre, afin de limiter les gradients thermiques entre la pompe et la turbine, des écrans thermiques, généralement au moins deux, sont installées entre la pompe et la turbine, en particulier autour du tore d'admission de la turbine, et un élément d'étanchéité est installé afin et d'empêcher des gaz chauds circulant dans la turbine de retourner vers des parties plus froides de la turbomachine, en particulier la pompe. Ces écrans thermiques et cet élément d'étanchéité rendent la conception, la fabrication et le montage de la turbomachine plus complexe que dans le cas d'une turbomachine dite « low power ». Cette complexité entraine également des coûts de fabrication de la turbomachine plus élevés que dans le cas d'une turbomachine dite « low power ». 11

L'arrière-plan technique comprend notamment les documents US2012/077607 et US4126405.

### Exposé de l'invention

Le présent exposé vise à remédier au moins en partie à ces inconvénients.

A cet effet, l'invention concerne une turbomachine comprenant un axe de rotation et une bride annulaire de fixation d'un premier composant à un deuxième composant, la bride annulaire de fixation comportant, en vue en coupe selon un plan comprenant l'axe de rotation, une portion intermédiaire en forme générale de « U » comprenant une âme prolongée par deux ailes, une première extrémité reliée au premier composant et une deuxième extrémité reliée au deuxième composant, le premier composant étant destiné à être à une première température et le deuxième composant étant destiné à être à une deuxième température, la deuxième température étant supérieure à la première température, la bride annulaire de fixation étant configurée pour qu'un déplacement radial maximum par unité de force de la deuxième extrémité soit supérieur ou égal à 10⁻⁹ mm/N (millimètre par Newton) et inférieur ou égal à 10⁻⁴ mm/N.

Le plan de coupe comprenant l'axe de rotation de la turbomachine est un plan de coupe axial.

Grâce à la forme en « U » de la bride annulaire de fixation, il est possible de positionner la bride annulaire de fixation entre le premier et le deuxième composant malgré la différence de température entre les deux composants et ce, sans générer de contraintes mécaniques relativement importantes. On comprend que par rapport à l'axe de rotation de la turbomachine, la bride annulaire de fixation est positionnée radialement entre le premier et le deuxième composant, c'est-à-dire que la première et la deuxième extrémité de la bride annulaire de fixation sont disposées radialement entre le premier composant et une extrémité radiale extérieure du deuxième composant. La bride annulaire de fixation n'est pas une bride radialement extérieure au deuxième composant.

On comprend que chaque aile comporte une des extrémités de la bride annulaire de fixation.

On comprend que la première température et la deuxième température sont des températures maximales en fonctionnement de la turbomachine.

Le positionnement de la bride annulaire de fixation entre le premier et le deuxième composant permet également de s'affranchir de la bride triple et de réduire la masse de la bride annulaire de fixation. En effet, lorsque la bride annulaire de fixation est reliée à un carter extérieur, la bride annulaire de fixation présente une masse plus importante que lorsque la bride annulaire de fixation est positionnée entre le premier et le deuxième composant.

En outre, la bride annulaire de fixation peut aussi jouer le rôle d'étanchéité entre le premier et le deuxième composant et empêcher des gaz chauds circulant dans le deuxième composant de retourner vers le premier composant. Cela permet de réduire le nombre de composants, la masse des composants requis pour le montage du deuxième composant dans la turbomachine et de réduire la complexité de la conception et du montage du deuxième composant dans la turbomachine.

Du fait du déplacement radial maximum par unité de force de la deuxième extrémité qui est supérieur ou égale à 10⁻⁹ mm/N et inférieur ou égal à 10⁻⁴ mm/N, le déplacement radial en fonctionnement du deuxième composant est contrôlé et la bride annulaire de fixation tout en possédant une certaine élasticité présente une rigidité permettant de fixer le premier composant au deuxième composant et ce, entre la température de fonctionnement (tenant compte d'un coefficient de sécurité) et la température ambiante, tout en tenant compte des différentes températures des composant en fonctionnement.

Le coefficient de sécurité pour la température peut par exemple être de 20%. Ainsi, la température minimale sera diminuée de 20% et la température maximale sera augmentée de 20%.

Le déplacement radial par unité de force reflète la souplesse de la bride annulaire de fixation. Ainsi, la souplesse maximale de la bride annulaire de fixation sera obtenue par le ratio d'un déplacement maximal de la deuxième extrémité de la bride annulaire de fixation rapporté à l'effort minimal et la souplesse minimale de la bride annulaire de fixation sera obtenue par le ratio d'un déplacement minimal de la deuxième extrémité de la bride annulaire de fixation rapporté à l'effort maximal. Le déplacement radial maximum par unité de force de la deuxième extrémité de la bride annulaire de fixation est donc compris entre ces deux valeurs de la souplesse de la bride annulaire de fixation.

La bride annulaire de fixation permet donc de fixer le premier composant dit « froid » au deuxième composant dit « chaud ».

Dans certains modes de réalisation, la bride annulaire de fixation est configurée pour que les contraintes maximales dues au gradient thermique en tout point de la bride annulaire de fixation soient comprises entre 100 MPa (mégapascal) et 1000 MPa.

On comprend qu'en fonctionnement et/ou lors de la montée ou de la descente en température, il existe un gradient thermique dans la bride annulaire de fixation. Ce gradient thermique (tenant compte d'un coefficient de sécurité) génère des contraintes qui varient d'un point à l'autre de la bride annulaire de fixation. En un point donné de la bride annulaire de fixation, la contrainte varie également au cours du temps, en fonction de la température. Aussi, la contrainte maximale est déterminée pour chaque point de la bride annulaire de fixation. En chaque point de la bride annulaire de fixation, la contrainte maximale est donc comprise entre 100 MPa et 1000 MPa. On comprend donc que la contrainte en un point donné peut être inférieure à 100 MPa.

Le coefficient de sécurité pour la température peut par exemple être de 20%. Ainsi, la température minimale sera diminuée de 20% et la température maximale sera augmentée de 20%.

Dans certains modes de réalisation, la première température est inférieure ou égale à 200 K, de préférence inférieure ou égale à 150 K, encore plus de préférence inférieure ou égale à 100 K et la deuxième température est supérieure ou égale à 300 K, de préférence supérieure ou égale à 500 K, encore plus de préférence supérieure ou égale à 700 K.

Dans certains modes de réalisation, dans laquelle une longueur de la bride annulaire de fixation, mesurée entre la première extrémité et la deuxième extrémité, est supérieure ou égale à 20 fois la dilatation thermique maximale de la bride annulaire de fixation, de préférence supérieure ou égale à 100 fois, encore plus de préférence supérieure ou égale à 500 fois et inférieure ou égale à 5000 fois la dilatation thermique maximale de la bride annulaire de fixation, de préférence inférieure ou égale à 3000 fois, encore plus de préférence inférieure ou égale à 1000 fois.

On comprend que pour mesurer la longueur de la bride annulaire de fixation, dans le plan de coupe comprenant à l'axe de rotation de la turbomachine, on prend une fibre neutre de la bride annulaire de fixation.

La dilatation thermique maximale est déterminée entre la température ambiante et les températures en fonctionnement, c'est-à-dire la première température et la deuxième température et est comparée à la longueur bride annulaire de fixation à température ambiante.

Dans certains modes de réalisation, les deux ailes sont espacées l'une de l'autre d'un espace supérieur ou égal à 2% de la longueur de la bride annulaire de fixation, de préférence supérieur ou égal à 5%, encore plus de préférence supérieur ou égal à 10% et inférieur ou égal à 50% de la longueur de la bride annulaire de fixation.

Dans certains modes de réalisation, l'âme présente une épaisseur et les ailes présentent une épaisseur, l'épaisseur de l'âme étant supérieure à l'épaisseur des ailes, de préférence l'épaisseur de l'âme étant 25 fois supérieure ou égale à l'épaisseur des ailes, encore plus de préférence 50 fois supérieure ou égale à l'épaisseur des ailes, encore plus de préférence 100 fois supérieure ou égale à l'épaisseur des ailes.

Dans certains modes de réalisation, l'âme présente une largeur et les ailes présentent une épaisseur, la largeur de l'âme étant supérieure à l'épaisseur des ailes, de préférence la largeur de l'âme étant 25 fois supérieure ou égale à l'épaisseur des ailes, encore plus de préférence 50 fois supérieure ou égale à l'épaisseur des ailes, encore plus de préférence 100 fois supérieure ou égale à l'épaisseur des ailes.

Dans certains modes de réalisation, l'âme a une face interne présentant un rayon de courbure non nul.

La limite supérieure du rayon de courbure de l'âme de la bride annulaire de fixation est généralement donnée par l'encombrement disponible entre la bride annulaire de fixation et le deuxième composant. Le rayon de courbure peut ne pas être constant, c'est-à-dire qu'il peut varier. A titre d'exemple non limitatif, la face interne pourrait présenter deux portions courbées séparées l'une de l'autre par une portion droite.

Selon la revendication 1, le premier composant est un corps de turbopompe, par exemple un moyeu de corps de turbopompe, et le deuxième composant est un conduit d'admission de gaz de turbine de turbopompe.

Dans certains modes de réalisation, la bride annulaire de fixation est réalisée en superalliage.

A titre d'exemples non limitatifs, on peut citer les superalliages à base nickel-chrome, tels que les alliages communément désignés par la marque déposée Inconel^{®}, Hastelloy^{®} X, les superalliages à base nickel-cuivre, tels que les alliages communément désignés par la marque déposée Monel^{®}, les superalliages à base nickel-chrome-cobalt, tels que les alliages communément désignés par la marque déposée Waspalloy^{®}, Nimonic^{®}, Astroloy^{®}, les superalliages en acier inoxydable martensitique, tels que les alliages communément désignés par la marque déposée 17-7-PH^{®}.

Dans certains modes de réalisation, la bride annulaire de fixation et le deuxième composant forment une pièce unique.

Le montage de la turbomachine est simplifié.

### Brève description des dessins

D'autres caractéristiques et avantages de l'objet du présent exposé ressortiront de la description suivante de modes de réalisation, donnés à titre d'exemples non limitatifs, en référence aux figures annexées.
[Fig. 1] La figure 1 est une vue schématique partielle en coupe axiale d'une turbomachine selon un premier mode de réalisation.
[Fig. 2] La figure 2 est une vue schématique partielle en coupe axiale d'une turbomachine selon un deuxième mode de réalisation.
[Fig. 3] La figure 3 est vue schématique en coupe axiale d'une bride annulaire de fixation selon un mode de réalisation.

Sur l'ensemble des figures, les éléments en commun sont repérés par des références numériques identiques.

### Description détaillée

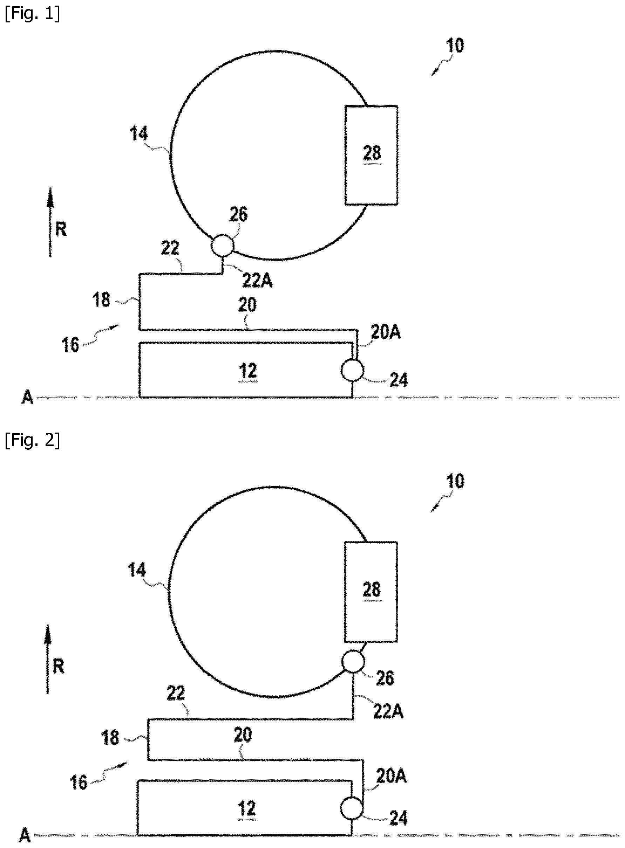

La figure 1 représente une vue schématique partielle en coupe axiale d'une turbomachine 10 selon un premier mode de réalisation. La turbomachine 10 comprend un axe de rotation A et une direction radiale R. La turbomachine 10 comprend un premier composant 12 et un deuxième composant 14. Le premier composant 12 est un corps de turbopompe, par exemple un moyeu de corps de turbopompe, et le deuxième composant 14 est un conduit d'admission de gaz de turbine de turbopompe.

Le deuxième composant 14 est fixé sur le premier composant 12 par une bride annulaire de fixation 16.

La bride annulaire de fixation 16 est disposée radialement entre le premier composant 12 et le deuxième composant 14. Comme on peut le constater sur la figure 1, grâce à la bride annulaire de fixation 16, le premier composant 12 et le deuxième composant 14 sont fixés l'un à l'autre sans une bride triple disposée radialement à l'extérieur du deuxième composant, comme cela est le cas dans les turbomachines de l'état de la technique.

En fonctionnement, le premier composant 12 est à une température maximale T1 et le deuxième composant est à une température maximale T2, la température T1 étant inférieure à la température T2.

La bride annulaire de fixation 16 comprend, en vue en coupe selon un plan comprenant l'axe de rotation A, une portion intermédiaire en forme générale de « U » comprenant une âme 18 prolongée par deux ailes 20, 22, une première extrémité 24 reliée au premier composant 12 et une deuxième extrémité 26 reliée au deuxième composant 14.

Dans le mode de réalisation de la figure 1, chaque aile 20, 22 est prolongée par une partie de fixation 20A, 22A, chaque partie de fixation 20A, 22A portant une extrémité 24, 26.

Dans le mode de réalisation de la figure 1, la turbomachine 10 comprend également des aubes de turbine 28 alimentées en gaz chaud par le deuxième composant 14, notamment le conduit d'admission de gaz de turbine de turbopompe.

La bride annulaire de fixation 16 est configurée pour qu'un déplacement radial maximum par unité de force de la deuxième extrémité soit supérieur ou égal à 10⁻⁹ mm/N (millimètre par Newton) et inférieur ou égal à 10⁻⁴ mm/N.

A titre d'exemple non-limitatif, pour un déplacement maximal de 10 mm de la deuxième extrémité 26 de la bride annulaire de fixation 16 et un effort minimal d'environ 603 186 N, la souplesse maximale de la bride annulaire de fixation 16 est égale à environ 1,7.10⁻⁵ mm/N et pour un déplacement minimal de 1 mm de la deuxième extrémité 26 de la bride annulaire de fixation 16 et un effort maximal d'environ 280 933 781 N, la souplesse minimale de la bride annulaire de fixation 16 est égale à 3,6.10⁻⁹ mm/N. Ainsi, le déplacement radial maximum par unité de force de la deuxième extrémité 26 de la bride annulaire de fixation 16 est donc compris entre ces deux valeurs de la souplesse de la bride annulaire de fixation.

A titre d'exemple non limitatif, la bride annulaire de fixation peut être réalisée en INCONEL 718.

Dans ce qui suit, les éléments communs aux différents modes de réalisation sont identifiés par les mêmes références numériques.

La figure 2 représente un deuxième mode de réalisation de la turbomachine 10 dans lequel la deuxième extrémité 26 est disposée différemment du positionnement du premier mode de réalisation.

On constate donc que la deuxième extrémité 26 peut être positionnée à des points différents du deuxième élément 14.

Les modes de réalisation des figures 1 et 2 sont donnés à titre d'exemples non limitatifs.

La première extrémité 24 peut également être disposée en des points différents et ce, en fonction notamment de l'encombrement et donc de l'espace disponible dans la turbomachine.

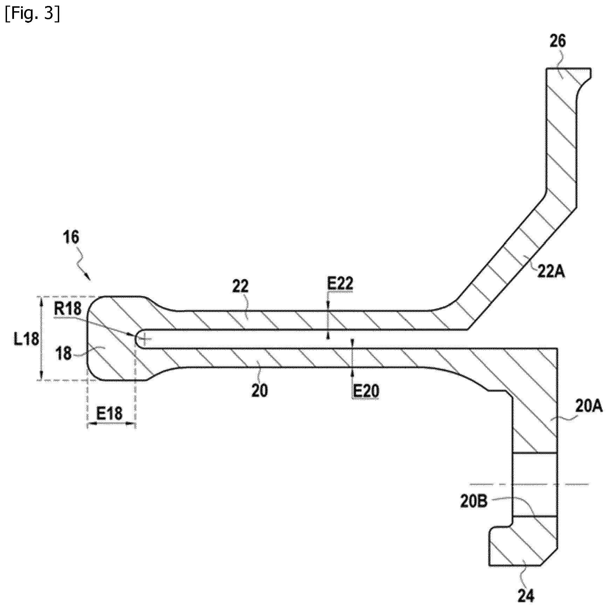

La figure 3 représente une vue schématique en coupe axiale de la bride annulaire de fixation de la figure 2.

Comme représenté sur la figure 3, l'âme 18 de la bride annulaire de fixation 16 présente une épaisseur E18 et une largeur L18 et les ailes 20, 22 présentent une épaisseur E20, E22.

Dans le mode de réalisation de la figure 3, l'épaisseur E18 et la largeur L18 de l'âme 18 est supérieure à l'épaisseur E20, E22 des ailes 20, 22. A titre d'exemple non-limitatif, l'épaisseur E20, E22 des ailes 20, 22 peut être égal à 4 mm, l'épaisseur E18 de l'âme 18 peut être égal à 10 mm et la largeur L18 de l'âme 18 peut être égale à 18 mm.

Dans le mode de réalisation de la figure 3, les ailes 20, 22 ont des épaisseurs E20, E22 qui sont égales. Les épaisseurs E20, E22 pourraient être différentes.

Dans le mode de réalisation de la figure 3, la face interne présente un rayon de courbure R18 non nul.

A titre d'exemple non limitatif, le rayon de courbure R18 de l'âme 18 peut être de 4 mm (millimètre).

Dans le mode de réalisation de la figure 3, le rayon de courbure R18 de l'âme 18 est constant. Il pourrait ne pas être constant.

Lorsque le rayon de courbure R18 de l'âme 18 est constant, l'espace entre les deux ailes 20, 22 de la bride annulaire de fixation 16 est égal à deux fois le rayon de courbure de l'âme 18.

Dans le mode de réalisation de la figure 3, la partie de fixation 20A comporte un orifice de fixation 24B de la bride annulaire de fixation 16 sur le premier composant 12.

A titre d'exemple non limitatif, la bride annulaire de fixation 16 peut être réalisée par fabrication additive, par exemple par fabrication additive par fusion laser sur lit de poudre. Lorsque la bride annulaire de fixation 16 est réalisée par fabrication additive, elle peut être réalisée en une seule pièce avec le deuxième composant. Ainsi, on peut s'affranchir de moyens de fixation de la deuxième extrémité 26 de la bride annulaire de fixation 16 avec le deuxième composant 14.

Quoique le présent exposé ait été décrit en se référant à un exemple de réalisation spécifique, il est évident que des différentes modifications et changements peuvent être effectués sur ces exemples sans sortir de la portée générale de l'invention telle que définie par les revendications.

Par conséquent, la description et les dessins doivent être considérés dans un sens illustratif plutôt que restrictif.

## Revendications

1. Turbomachine (10) comprenant un axe de rotation (A) et une bride annulaire de fixation (16) d'un premier composant (12) à un deuxième composant (14), le premier composant (12) étant un corps de turbopompe et le deuxième composant (14) étant un conduit d'admission de gaz de turbine de turbopompe, la bride annulaire de fixation (16) comportant, en vue en coupe selon un plan comprenant l'axe de rotation (A), une portion intermédiaire en forme générale de « U » comprenant une âme (18) prolongée par deux ailes (20, 22), une première extrémité (24) reliée au premier composant (12) et une deuxième extrémité (26) reliée au deuxième composant (14), le premier composant (12) étant destiné à être à une première température (T1) et le deuxième composant (14) étant destiné à être à une deuxième température (T2), la deuxième température (T2) étant supérieure à la première température (T1), la bride annulaire de fixation (16) étant configurée pour qu'un déplacement radial maximum par unité de force de la deuxième extrémité (26) soit supérieur ou égal à 10⁻⁹ mm/N et inférieur ou égal à 10⁻⁴ mm/N.

2. Turbomachine (10) selon la revendication 1, dans laquelle la bride annulaire de fixation (16) est configurée pour que les contraintes maximales dues au gradient thermique en tout point de la bride annulaire de fixation (16) soient comprises entre 100 MPa et 1000 MPa.

3. Turbomachine (10) selon la revendication 1 ou 2, dans laquelle la première température (T1) est inférieure ou égale à 200 K, de préférence inférieure ou égale à 150 K, encore plus de préférence inférieure ou égale à 100 K et la deuxième température (T2) est supérieure ou égale à 300 K, de préférence supérieure ou égale à 500 K, encore plus de préférence supérieure ou égale à 700 K.

4. Turbomachine (10) selon l'une quelconque des revendications 1 à 3, dans laquelle une longueur de la bride annulaire de fixation (16), mesurée entre la première extrémité (24) et la deuxième extrémité (26), est supérieure ou égale à 20 fois la dilatation thermique maximale de la bride annulaire de fixation (16), de préférence supérieure ou égale à 100 fois, encore plus de préférence supérieure ou égale à 500 fois et inférieure ou égale à 5000 fois la dilatation thermique maximale de la bride annulaire de fixation (16), de préférence inférieure ou égale à 3000 fois, encore plus de préférence inférieure ou égale à 1000 fois.

5. Turbomachine (10) selon la revendication 4, dans laquelle les deux ailes (20, 22) sont espacées l'une de l'autre d'un espace supérieur ou égal à 2% de la longueur de la bride annulaire de fixation, de préférence supérieur ou égal à 5%, encore plus de préférence supérieur ou égal à 10% et inférieur ou égal à 50% de la longueur de la bride annulaire de fixation.

6. Turbomachine (10) selon l'une quelconque des revendications 1 à 5, dans laquelle l'âme (18) présente une épaisseur (E18) et les ailes (20, 22) présentent une épaisseur (E20, E22), l'épaisseur (E18) de l'âme (18) étant supérieure à l'épaisseur (E20, E22) des ailes (20, 22), de préférence l'épaisseur (E18) de l'âme (18) étant 25 fois supérieure ou égale à l'épaisseur (E20, E22) des ailes (20, 22), encore plus de préférence 50 fois supérieure ou égale à l'épaisseur (E20, E22) des ailes (20, 22), encore plus de préférence 100 fois supérieure ou égale à l'épaisseur (E20, E22) des ailes (20, 22).

7. Turbomachine selon l'une quelconque des revendications 1 à 6, dans laquelle l'âme (18) présente une largeur (L18) et les ailes (20, 22) présentent une épaisseur (E20, E22), la largeur (L18) de l'âme (18) étant supérieure à l'épaisseur (E20, E22) des ailes (20, 22), de préférence la largeur (L18) de l'âme (18) étant 25 fois supérieure ou égale à l'épaisseur (E20, E22) des ailes (20, 22), encore plus de préférence 50 fois supérieure ou égale à l'épaisseur (E20, E22) des ailes (20, 22) encore plus de préférence 100 fois supérieure ou égale à l'épaisseur (E20, E22) des ailes (20, 22).

8. Turbomachine (10) selon l'une quelconque des revendications 1 à 7, dans laquelle l'âme (18) a une face interne présentant un rayon de courbure (R18) non nul.

9. Turbomachine (10) selon l'une quelconque des revendications 1 à 8, dans laquelle la bride annulaire de fixation (16) est réalisée en superalliage.

## Patentansprüche

1. Turbomaschine (10), die eine Rotationsachse (A) und einen ringförmigen Befestigungsflansch (16) einer ersten Komponente (12) an eine zweite Komponente (14) umfasst, wobei die erste Komponente (12) ein Turbopumpenkörper ist und die zweite Komponente (14) ein Kanal zur Aufnahme von Gas der Turbopumpenturbine ist, wobei der ringförmige Befestigungsflansch (16), gesehen in Schnittansicht gemäß einer Ebene, die die Rotationsachse (A) umfasst, einen Zwischenabschnitt mit der allgemeinen Form eines "U", umfassend ein Zentralelement (18), das durch zwei Flügel (20, 22) verlängert ist, ein erstes Ende (24), das mit der ersten Komponente (12) verbunden ist, und ein zweites Ende (26), das mit der zweiten Komponente (14) verbunden ist, umfasst, wobei die erste Komponente (12) ausgelegt ist, um eine erste Temperatur (T1) aufzuweisen, und die zweite Komponente (14) ausgelegt ist, um eine zweite Temperatur (T2) aufzuweisen, wobei die zweite Temperatur (T2) höher als die erste Temperatur (T1) ist, wobei der ringförmige Befestigungsflansch (16) so konfiguriert ist, dass eine maximale radiale Verschiebung pro Krafteinheit des zweiten Endes (26) größer als oder gleich wie 10⁻⁹ mm/N und kleiner als oder gleich wie 10⁻⁴ mm/N ist.

2. Turbomaschine (10) nach Anspruch 1, wobei der ringförmige Befestigungsflansch (16) so konfiguriert ist, dass die maximalen Belastungen aufgrund des thermischen Gradienten an jedem Punkt des ringförmigen Befestigungsflansches (16) im Bereich zwischen 100 MPa und 1000 MPa liegen.

3. Turbomaschine (10) nach Anspruch 1 oder 2, wobei die erste Temperatur (T1) niedriger als oder gleich wie 200 K ist, vorzugsweise niedriger als oder gleich wie 150 K, noch bevorzugter niedriger als oder gleich wie 100 K, und die zweite Temperatur (T2) höher als oder gleich wie 300 K ist, vorzugsweise höher als oder gleich wie 500 K, noch bevorzugter höher als oder gleich wie 700 K.

4. Turbomaschine (10) nach einem der Ansprüche 1 bis 3, wobei eine Länge des ringförmigen Befestigungsflansches (16), gemessen zwischen dem ersten Ende (24) und dem zweiten Ende (26), größer als oder gleich wie 20 Mal die maximale thermische Ausdehnung des ringförmigen Befestigungsflansches (16) ist, vorzugsweise größer als oder gleich wie 100 Mal, noch bevorzugter größer als oder gleich wie 500 Mal und kleiner als oder gleich wie 5000 Mal die maximale thermische Ausdehnung des ringförmigen Befestigungsflansches (16) ist, vorzugsweise kleiner als oder gleich wie 3000 Mal, noch bevorzugter kleiner als oder gleich wie 1000 Mal.

5. Turbomaschine (10) nach Anspruch 4, wobei die zwei Flügel (20, 22) voneinander um einen Zwischenraum beabstandet sind, der größer als oder gleich wie 2 % der Länge des ringförmigen Befestigungsflansches ist, vorzugsweise größer als oder gleich wie 5 %, noch bevorzugter größer als oder gleich wie 10 % und kleiner als oder gleich wie 50 % der Länge des ringförmigen Befestigungsflansches.

6. Turbomaschine (10) nach einem der Ansprüche 1 bis 5, wobei das Zentralelement (18) eine Dicke (E18) aufweist und die Flügel (20, 22) eine Dicke (E20, E22) aufweisen, wobei die Dicke (E18) des Zentralelements (18) größer als die Dicke (E20, E22) der Flügel (20, 22) ist, wobei vorzugsweise die Dicke (E18) des Zentralelements (18) 25 Mal größer als oder gleich wie die Dicke (E20, E22) der Flügel (20, 22) ist, noch bevorzugter 50 Mal größer als oder gleich wie die Dicke (E20, E22) der Flügel (20, 22) ist, noch bevorzugter 100 Mal größer als oder gleich wie die Dicke (E20, E22) der Flügel (20, 22) ist.

7. Turbomaschine (10) nach einem der Ansprüche 1 bis 6, wobei das Zentralelement (18) eine Breite (L18) aufweist und die Flügel (20, 22) eine Dicke (E20, E22) aufweisen, wobei die Breite (L18) des Zentralelements (18) größer als die Dicke (E20, E22) der Flügel (20, 22) ist, wobei vorzugsweise die Breite (L18) des Zentralelements (18) 25 Mal größer als oder gleich wie die Dicke (E20, E22) der Flügel (20, 22) ist, noch bevorzugter 50 Mal größer als oder gleich wie die Dicke (E20, E22) der Flügel (20, 22) ist, noch bevorzugter 100 Mal größer als oder gleich wie die Dicke (E20, E22) der Flügel (20, 22) ist,

8. Turbomaschine (10) nach einem der Ansprüche 1 bis 7, wobei das Zentralelement (18) eine Innenfläche aufweist, die einen Krümmungsradius (R18) von nicht null aufweist.

9. Turbomaschine (10) nach einem der Ansprüche 1 bis 8, wobei der ringförmige Befestigungsflansch (16) aus Superlegierung hergestellt ist.

## Claims

1. A turbine engine (10) comprising an axis of rotation (A) and an annular flange (16) for attaching a first component (12) to a second component (14), the first component (12) being a turbopump body and the second component (14) being a turbopump turbine gas inlet duct, the annular attachment flange (16) comprising, seen in cross-section along a plane comprising, at the axis of rotation (A), an intermediate portion in the general shape of a "U" comprising a core (18) extended by two wings (20, 22), a first end (24) connected to the first component (12) and a second end (26) connected to the second component (14), the first component (12) being intended to be at a first temperature (T1) and the second component (14) being intended to be at a second temperature (T2), the second temperature (T2) being higher than the first temperature (T1), the annular attachment flange (16) being configured so that a maximum radial displacement per unit force of the second end (26) is greater than or equal to 10⁻⁹ mm/N and less than or equal to 10⁻⁴ mm/N.

2. The turbine engine (10) according to claim 1, wherein the annular attachment flange (16) is configured so that the maximum stresses due to the thermal gradient at any point of the annular attachment flange (16) are between 100 MPa and 1000 MPa.

3. The turbine engine (10) according to claim 1 or 2, wherein the first temperature (T1) is less than or equal to 200 K, preferably less than or equal to 150 K, even more preferably less than or equal to 100 K and the second temperature (T2) is greater than or equal to 300 K, preferably greater than or equal to 500 K, even more preferably greater than or equal to 700 K.

4. The turbine engine (10) according to any one of claims 1 to 3, wherein a length of the annular attachment flange (16), measured between the first end (24) and the second end (26), is greater than or equal to 20 times the maximum thermal expansion of the annular attachment flange (16), preferably greater than or equal to 100 times, even more preferably greater than or equal to 500 times and less than or equal to 5000 times the maximum thermal expansion of the annular attachment flange (16), preferably less than or equal to 3000 times, even more preferably less than or equal to 1000 times.

5. The turbine engine (10) according to claim 4, wherein the two wings (20, 22) are spaced apart by a space greater than or equal to 2% of the length of the annular attachment flange, preferably greater than or equal to 5%, even more preferably greater than or equal to 10% and less than or equal to 50% of the length of the annular attachment flange.

6. The turbine engine (10) according to any one of claims 1 to 5, wherein the core (18) has a thickness (E18) and the wings (20, 22) have a thickness (E20, E22), the thickness (E18) of the core (18) being greater than the thickness (E20, E22) of the wings (20, 22), preferably the thickness (E18) of the core (18) being 25 times greater than or equal to the thickness (E20, E22) of the wings (20, 22), even more preferably 50 times greater than or equal to the thickness (E20, E22) of the wings (20, 22), even more preferably 100 times greater or equal to the thickness (E20, E22) of the wings (20, 22).

7. The turbine engine according to any one of claims 1 to 6, wherein the core (18) has a width (L18) and the wings (20, 22) have a thickness (E20, E22), the width (L18) of the core (18) being greater than the thickness (E20, E22) of the wings (20, 22), preferably the width (L18) of the core (18) being 25 times greater than or equal to the thickness (E20, E22) of the wings (20, 22), even more preferably 50 times greater than or equal to the thickness (E20, E22) of the wings (20, 22), even more preferably 100 times greater than or equal to the thickness (E20, E22) of the wings (20, 22).

8. The turbine engine (10) according to any one of claims 1 to 7, wherein the core (18) has an inner face having a radius of curvature (R18) that is not zero.

9. The turbine engine (10) according to any one of claims 1 to 8, wherein the annular attachment flange (16) is made of a superalloy.
